Europäisches Patentamt

European Patent Office

Office européen des brevets

(11) Publication number: **0 021 102**
**B1**

## EUROPEAN PATENT SPECIFICATION

(45) Date of publication of patent specification: 08.05.85

(51) Int. Cl.⁴: **A 23 G 3/00**

(21) Application number: **80102998.4**

(22) Date of filing: 29.05.80

(54) Bonbon with a herbal core and process for its preparation.

(30) Priority: 22.06.79 DE 2925229

(43) Date of publication of application:
07.01.81 Bulletin 81/01

(45) Publication of the grant of the patent:
08.05.85 Bulletin 85/19

(84) Designated Contracting States:
AT BE CH FR GB IT LI NL SE

(56) References cited:
BE-A- 659 688
DE-A-2 247 140
DE-C- 835 548
FR-A-1 401 169
FR-A-1 585 399
FR-A-2 270 800

(73) Proprietor: **Richardson GmbH**
**H.-S.-Richardson-Strasse Postfach 1661**
**D-6080 Gross-Gerau (DE)**

(72) Inventor: **Wienecke, Horst, Dr.**
**Mörfelder Strasse 42**
**D-6080 Gross-Gerau (DE)**

(74) Representative: **Beil, Walter, Dr. et al**
**BEIL, WOLFF & BEIL Rechtsanwälte**
**Adelonstrasse 58**
**D-6230 Frankfurt am Main 80 (DE)**

## Description

The invention relates to a process for the preparation of bonbons with a herbal core consisting of a hard bonbon coat and a core of viscous material, characterized in that ultra-fine comminuted herbal parts are added to the viscous filling material at 85 to 120°C, and the mixture, after a short period of cooling down to about 80 to 95°C, is immediately pumped in known manner into the hard bonbon coat.

Bonbons with herbal flavour, consisting either only of a hard bonbon material or of a soft core and a hard bonbon coat are known.

The bonbons consisting of a soft core and a hard bonbon coat have up to now been prepared by preparing a tea-like aqueous extract from the herbs whose aroma and effect were desired, sifting off the solids, concentrating the extract and then mixing it with the basic compound for the filling material and the filler, respectively (e.g. honey, glucose syrup, and/or malt extract). Such a manner of preparation necessitates, however, to tediously concentrate the herbal extract, combined with relatively expensive equipment and a loss of flavour and effective substances.

A further method consists in mixing the filling material with ethereal oils or extracts of the desired herbs. For a multitude of herbs, particularly camomile, sage, and thyme, this process did not result in the desired natural fresh flavour of the bonbons.

FR—A—1401169 discloses hard bonbons containing very finely powdered herbs.

These herbal hard bonbons are prepared by incorporating the herbs into the hard bonbon mass after it has been cooked at temperatures of the mass which are sufficient low to avoid any alteration of the powdered herbs but high enough to secure the plasticity which is necessary for well kneading the mixture.

Experiments to incorporate such herbal parts into the used amounts of hard bonbons met with failures insofar as when sucking these parts irritations of the mucuous membranes of the mouth were caused.

FR—A—1585399 discloses a process for the stabilisation of perishable products comprising cold-mixing monosaccharides with said products. The products obtained by said process might be very fluid, less fluid, more consistent and very consistent. The less fluid products are obtained from very juicy fruits and can be used as bonbon fillings, while the very consistent products are obtained among others from herbal products e.g. lime-blossom and vervain. There is no teaching that the very consistent herbal products can be used for bonbon fillings.

The object of the invention was to provide a herbal bonbon with natural fresh flavour which could be prepared in a simple manner.

This task was solved by a bonbon with a herbal core consisting of a hard bonbon coat and a core of a viscous filling material, characterized in that the filling material contains ultra-fine comminuted herbal parts, and a process for its preparation, characterized in that ultra-fine comminuted herbal parts are added to the viscous filling material at 85 to 120°C and the mixture, after a short period of cooling down to a feeding-in temperature of about 80 to 95°C, is immediately pumped in known manner into the hard bonbon coat.

The bonbons with a herbal core according to the invention have an exceptional fresh, natural herbal flavour.

This manner of solution was insofar surprising as not only from the experts but also from the customers existed a pronounced prejudice against the "sucking of tea parts", in view of the irritations of the mucuous membrane of the mouth mentioned above.

Contrary thereto, when introduced into a soft core no irritations could be ascertained.

The process for the preparation, when compared to the above described process for preparing herbal extracts, has, aside from the already mentioned improvement in flavour, the advantage that with regard to the amount of time and equipment spent it is substantially more economical.

As filling material e.g. glucose syrup, honey, or malt extract or mixtures thereof may be used.

The minimal amount of herbal parts should be about 0,8%, calculated on the filling material.

The particle size should be smaller than 1,0 mm.

Before adding the herbal parts to the filling material, the latter is heated to about 118 to 120°C. The herbal parts are added between 85 and 120°C, preferably at 115 to 116°C. Within this temperature range the aromatic substance of the herbal parts on the one hand are optimally liberated, on the other hand, however, not destroyed. The water content of the compound amounts to about 12%.

The herbal parts are added at the above mentioned temperature, however without further heating, i.e. practically during the cooling off period. After a short cooling off to about 80 to 95°C the compound containing the herbal parts is thereafter continuously pumped into the hard bonbon coat. The residence time from the addition of the herbal parts up to the feed-in of the herbal filling material into the hard bonbon coat lasts about 1/2 to 3/4 of an hour. For pumping-in the conventional devices are used.

The herbal compound is prepared in small portions, e.g. about 300 kg in order to steadily enclose the liberated aromatic substances in the hard bonbon coat, e.g. having the batch used up within about 1 1/2 hours of preparation and to so preserve the fresh flavour.

For the herbal parts all herbs can be used which contain ethereal oils and are capable of liberating the flavour and effective substances, respectively, like e.g. camomile, peppermint, sage, and thyme.

The bonbons with a herbal core are preferably used as cough drops.

As ultra-fine comminuted herbal parts, e.g. the commercially obtainable blossoms or peppermint leaves as finely cut drug, both in DAB (Deutsches Arzneibuch)-quality, can be used. They can be also comminuted on the spot with the suitable equipment.

As material for the hard bonbon coat any bonbon material suitable for this purpose can be used. To the coat itself ethereal oils and aromatic substances of the various desired herbs can be added.

**Claims**

1. Process for the preparation of bonbons with a herbal core consisting of a hard bonbon coat and a core of viscous material, characterized in that ultra-fine comminuted herbal parts are added to the viscous filling material at 85 to 120°C, and the mixture, after a short period of cooling down to about 80 to 95°C, is immediately pumped in known manner into the hard bonbon coat.

2. Process according to claim 1, characterized in that the herbal parts are added to the filling material at 115 to 116°C.

3. Process according to claim 1, characterized in that the herbal parts used consist of camomile, peppermint, sage, and thyme.

**Revendications**

1. Procédé pour la préparation de bonbons à coeur fait d'herbes consistant en un revêtement dur de bonbons et un coeur de matière visqueuse, caractérisé en ce que l'on ajoute des parties d'herbes broyées ultrafines à la matière visqueuse de remplissage à 85-120°C et, après une courte durée de refroidissement jusqu'à environ 80 à 95°C, le mélange est immédiatement pompé de manière connue dans le revêtement dur de bonbons.

2. Procédé selon la revendication 1, caractérisé en ce que les parties d'herbes sont ajoutées à la matière de remplissage à 115—116°C.

3. Procédé selon la revendication 1, caractérisé en ce que les parties d'herbes utilisées consistent en camomille, menthe poivrée, sauge et thym.

**Patentansprüche**

1. Verfarhren zur Herstellung von Kräuterkernbonbons bestehend aus einem Hartbonbonmantel und einem Kern aus einer zähflüssigen Füllmasse, dadurch gekennzeichnet, daß man feinstzerkleinerte Kräuterteilchen der zähflüssigen Füllmasse bei 85 bis 120°C zusetzt und das Gemisch nach kurzer Abkühlungszeit auf eine Einfülltemperatur von etwa 80 bis 95°C sofort in an sich bekannter Weise in den Hartbonbonmantel einpumpt.

2. Verfahren nach Anspruch 1, dadurch gekennzeichnet, daß die Kräuterteilchen der Füllmasse bei 115 bis 116°C zugesetzt werden.

3. Verfahren nach Anspruch 1, dadurch gekennzeichnet, daß die Kräuterteilchen aus Kamille, Pfefferminz, Salbei oder Thymian bestehen.